Europäisches Patentamt

European Patent Office

Office européen des brevets

(11) Veröffentlichungsnummer: **0 322 632 B1**

# EUROPÄISCHE PATENTSCHRIFT

(45) Veröffentlichungstag der Patentschrift: **22.06.94**

(51) Int. Cl.⁵: **C08L 33/08**, C08L 51/00

(21) Anmeldenummer: **88120786.4**

(22) Anmeldetag: **13.12.88**

(54) **Flexible Polymermischungen.**

(30) Priorität: **22.12.87 DE 3743489**

(43) Veröffentlichungstag der Anmeldung:
**05.07.89 Patentblatt 89/27**

(45) Bekanntmachung des Hinweises auf die
Patenterteilung:
**22.06.94 Patentblatt 94/25**

(84) Benannte Vertragsstaaten:
**DE FR GB IT NL SE**

(56) Entgegenhaltungen:
**EP-A- 0 122 516**

(73) Patentinhaber: **BAYER AG**

**D-51368 Leverkusen(DE)**

(72) Erfinder: **Piejko, Karl-Erwin, Dr.**
**Unterscheider Weg 7a**
**D-5060 Bergisch Gladbach 2(DE)**
Erfinder: **Lindner, Christian, Dr.**
**Riehler Strasse 200**
**D-5000 Köln 60(DE)**
Erfinder: **Braese, Hans-Eberhard, Dipl.-Ing.**
**Käthe-Kollwitz-Strasse 3**
**D-5000 Köln 71(DE)**
Erfinder: **Kubens, Rolf, Dr.**
**Carl-Leverkus-Strasse 1**
**D-5068 Odenthal(DE)**
Erfinder: **Ott, Karl-Heinz, Dr.**
**Paul-Klee-Strasse 54**
**D-5090 Leverkusen(DE)**

EP 0 322 632 B1

**Beschreibung**

Die Erfindung betrifft flexible, weiche Polymermischungen, die sich zur Herstellung von Folien mit lederartigem Aussehen eignen und die durch Kalandrieren und Tiefziehen verarbeitet werden können.

Folien mit lederartigem Aussehen haben derzeit große Bedeutung beispielsweise zur Innenverkleidung von Kraftfahrzeugen. Sie werden meist durch Kalandrierung einer Rohfolie und anschließendes Tiefziehen hergestellt. Als Kunststoff verwendet man meist Polyvinylchlorid im Gemisch mit verschiedenen Vinylpolymerisaten und Weichmachern. Diese Folien sind nur begrenzt alterungsstabil bei hohen Temperaturen, enthalten flüchtige, zur Migration neigende Komponenten sowie Halogen. Diese Nachteile sind überwiegend auf das Polvinylchlorid zurückzuführen. Es besteht daher Bedarf an einem Kunststoffmaterial, das kein Polyvinylchlorid enthält und für die Herstellung von lederartigen Folien geeignet ist.

Die europäische Patentanmeldung 122 516 beschreibt Mischungen aus Pfropfpolymerisaten von Styrol und Acrylnitril auf Dien- oder Acrylatkautschuke mit kautschukartigen Copolymerisaten von Alkylacrylaten. Diese Mischungen sind geeignet zur Herstellung von Formkörpern und zur Herstellung von Folien, die ihrerseits als Kaschierfolien dienen. Diese Produkte eignen sich nicht zum Tiefziehen. Dies wird durch das Beispiel 1.8 demonstriert. In diesem Beispiel, das zum Vergleich aufgenommen ist, wird eine Mischung gemäß europäischer Anmeldung 122 516 hergestellt und gezeigt, daß sie sich nicht tiefziehen läßt. Erfindungsgemäß hat man nun solchen Mischungen ein zweites Pfropfpolymerisat zugefügt, und zwar ein Material mit einem sehr hohen Kautschukanteil. Durch diese Modifikation werden die Produkte tiefflehfähig.

Es wurde gefunden, daß eine Polymermischung aus einem speziellen Pfropfpolymerisat a) wie unten definiert, einem speziellen Pfropfpolymerisat b) wie unten definiert, einem speziellen Alkylacrylatkautschuk und gegebenenfalls bestimmten harzartigen Copolymerisaten sich hervorragend zur Herstellung von Folien auch mit Lederprägung und Tiefziehverarbeitung eignet. Die erhaltenen Folien sind alterungsstabil (Temperaturalterung) und Polyvinylchlorid-Systemen überlegen. Zur technischen Verarbeitung sind nur sehr geringe Mengen Hilfsstoffe (Stabilisatoren, Gleitmittel, Trennmittel etc.) erforderlich, verglichen mit bekannten Materialien auf Polyvinylchlorid-Basis.

Gegenstand der Erfindung sind somit:

Weiche, flexible Polymermischungen aus

a) 30 - 70 Gew.-Teilen eines Pfropfpolymerisates eines Gemisches aus 25 - 40, insbesondere 30 - 40, Gew.-Teilen Acrylnitril und 75 - 60, insbesondere 70 - 60, Gew.-Teilen Styrol, $\alpha$-Methylstyrol, Alkylmethacrylat oder Mischungen daraus, auf teilchenförmige, Alkylacrylatkautschuke mit mittleren Teilchendurchmessern ($d_{50}$) von 0,1 - 0,8 $\mu$m, und Gelgehalten von 50-98 Gew.-% mit einem Gesamtautschukgehalt von 20 - 55 Gew.-% und hergestellt mit einer Pfropfausbeute von größer 25 Gew.-%, bevorzugt größer 40 Gew.-%,

b) 60 - 5 Gew.-Teilen eines Pfropfpolymerisates von
(b1) 35 bis 10 Gew.-Teilen Methylmethacrylat, gegebenenfalls in Kombination mit bis zu 30 Gew.-% Styrol, Acrylnitril und/oder Alkylacrylat oder
(b2) 35 bis 10 Gew.-Teilen eines Gemisches aus 20 - 40 Gew.-% Acrylnitril und 80 - 60 Gew.-% Styrol, $\alpha$-Methylstyrol, Alkylmethacrylat oder Mischungen daraus,
auf 65-90 Gew.-Teile eines teilchenförmigen Alkylacrylatkautschuks mit einem mittleren Teilchendurchmesser ($d_{50}$) von 0,1 - 0,8 $\mu$m und Gelgehalten von 50-98 Gew.-% mit einem Gesamtkautschukgehalt von 65 - 90 Gew.-% und

c) 10 - 40 Gew.-Teilen eines kautschukartigen Copolymerisates aus $C_1$ 5 - 40 Gew.-% Acrylnitril, Styrol, Alkylmethacrylat oder deren Mischungen und $C_2$ 95 - 60 Gew.-% Alkylacrylat sowie 0,05 bis 5 Gew.-%, bezogen auf die Summe von $C_1$ und $C_2$ einer polyfunktionellen polymerisierbaren Polyvinyl- oder Allylverbindung, mit einem Gelgehalt von 20 bis 99 Gew.-% und einem Quellungsindex größer 10, gemessen in Dimethylformamid bei 23°C, und einem mittleren Teilchen durchmesser ($d_{50}$) von 0,15-0,4 $\mu$m, und

d) gegebenenfalls bis zu 6 Gew.-%, insbesondere 1 - 5 Gew.-%, bezogen auf die Gesamtmenge a + b + c eines harzartigen unvernetzten Polymerisates aus wenigstens 60 Gew.-% Styrol, $\alpha$-Methylstyrol oder Alkylmethacrylat und bis zu 40 Gew.-% Acrylnitril oder Methacrylnitril mit Staudingerzahlen [$\eta$] (in Dimethylformamid bei 25°C) von 2 - 10 dl/g, insbesondere 2,5 - 6 dl/g.

Pfropfpolymerisate a) im Sinne der Erfindung sind Pfropfprodukte der genannten Vinylmonomeren auf teilchenförmige, Alkylacrylatkautschuke mit mittleren Teilchendurchmessern ($d_{50}$) von 0,1-0,8 $\mu$m und Gelgehalten von 50-98 Gew.-% (Pfropfgrundlagen) insbesondere solche auf der Basis von $C_2$-$C_8$-Alkylacrylat. Bevorzugt sind Acrylatkautschuke, die durch vernetzende Copolymerisation von Alkylacrylaten mit bis zu 2 Gew,-% polyfunktionellen Vinyl- und/oder Allylmonomeren, wie Divinylbenzol, Glykol-bisacrylat, Bisacrylamid, Phosphorsäuretriallylester, Zitronensäuretriallylester, Triallylcyanurat, Triallylisocyanu-

2

rat, Allylester von Acrylsäure oder Methacrylsäure, Maleinsäureallylester, insbesondere Triallylcyanurat oder Triallylisocyanurat, erhalten worden sind. Als Pfropfgrundlagen bevorzugte Acrylatkautschuke liegen in Form kleiner Teilchen vor und besitzen eine bimodale Verteilung der mittleren Teilchendurchmesser. Es handelt sich also eigentlich um Gemische von zwei teilchenförmigen Kautschuken, wobei der eine einen mittleren Teilchendurchmesser ($d_{50}$) von 0,15 bis 0,25 $\mu$m und der andere einen mittleren Teilchendurchmesser ($d_{50}$) von 0,4 bis 0,6 $\mu$m besitzt. Das Gewichtsverhältnis des feinteiligen zum grobteiligen Kautschuk ist 1:2 bis 2:1. In der Mischung der beiden Kautschuke, die den gleichen oder verschiedenen chemischen Aufbau haben können, befinden sich dann in der Verteilungskurve der mittleren Teilchendurchmesser 2 Maxima.

Besonders geeignete grobteilige Kautschuke weisen eine sogenannte Kern-Mantelstruktur auf (vgl. DE-OS 3 006 804).

Besonders bevorzugte Pfropfgrundlagen im Sinne der Erfindung zur Herstellung der Komponente a) sind somit Gemische von (größeren) Kautschukteilchen mit Kern/Mantel-Struktur und (kleineren) Kautschukteilchen ohne Kern Mantel-Struktur. Die zur Pfropfpolymerisation eingesetzten Kautschukteilchen besitzen Gelgehalte von 50 - 98 Gew.-%.

Zur Herstellung von a) werden auf Emulsionen der beschriebenen Acrylatkautschuke, in Emulsion die genannten Vinylmonomeren pfropfpolymerisiert. Man verwendet 20 - 55 Gew.-% Kautschuk und 80 - 45 Gew.-% Vinylmonomere. Die Vinylmonomeren sind Mischungen aus 25 - 40, insbesondere 30 - 35 Gew.-Teilen Acrylnitril und 75 - 60, insbesondere 70 - 65 Gew.-Teilen Styrol, $\alpha$-Methylstyrol, $C_1$-$C_6$-Alkylmethacrylat, insbesondere Mischungen aus Styrol und Acrylnitril. Die Vinylmonomeren werden bevorzugt unter Bedingungen auf die Acrylatkautschuke polymerisiert, die eine Pfropfausbeute größer 40 Gew.-%, insbesondere größer 50 Gew.-% ergeben; d.h. ein großer Teil des Vinylmonomeren soll chemisch an den Kautschuk (über kovalente Bindungen) gebunden werden. Üblicherweise ist die Pfropfausbeute bei Acrylatkautschuken nur mäßig, da sie (im Vergleich zu Dienkautschuken) nur sehr wenige reaktive Doppelbindungen besitzen. Man erhält erhöhte Pfropfausbeuten, wenn man in an sich bekannter Weise mit Redox-Inititatoren arbeitet; bevorzugt sind Kombinationen aus Hydroperoxid und Ascorbinsäure, gegebenenfalls unter Zusatz von Schwermetallkationen.

Pfropfpolymerisate b) im Sinne der Erfindung sind Pfropfprodukte mit einer Pfropfhülle aus einem Polymerisat aus 35 - 10 Gew,-Teilen Methylmethacrylat, gegebenenfalls in Kombination mit bis zu 30 Gew.-% Styrol, Acrylnitril und/oder Alkylacrylat, insbesondere $C_3$-$C_8$-Alkylacrylat, vorzugsweise Butylacrylat, oder einem Polymerisat aus 35 - 10 Gew.-Teilen einer Mischung aus 20 - 40 Gew.-Teilen Acrylnitril mit 60 - 80 Gew.-Teilen Styrol, $\alpha$-Methylstyrol, $C_1$-$C_6$-Alkylmethacrylat, insbesondere Styrol und Acrylnitril. Die Pfropfgrundlage besteht aus 65 - 90 Gew.-Teilen eines teilchenförmigen, vernetzten Alkylacrylatkautschuks mit mittleren Teilchendurchmessern ($d_{50}$) von 0,1 - 0,8 $\mu$m, bevorzugt 0,35 - 0,5 $\mu$m und Gelgehalten von 50-98 Gew.-% Bevorzugt, wie auch bei Komponente a), sind hierbei Copolymerisate aus $C_3$-$C_8$-Alkylacrylat mit bis zu 3, bevorzugt bis zu 2 Gew.-% polyfunktionellen Monomeren wie Polyallylverbindungen, vorzugsweise Triallylcyanurat; die Pfropfgrundlagen können genau wie die der Komponente a) eine bimodale Teilchengrößenverteilung besitzen. Die Pfropfpolymerisate b) können nach üblichen Verfahren durch radikalische Emulsionspfropfpolymerisation der augegebenen Vinylmonomeren in Gegenwart der Kautschuklatices bei Temperaturen von 60 - 90 °C erzeugt werden, unter Verwendung wasserlöslicher Inititatoren wie Peroxidisulfat oder (wie bei Komponente a)) mit Hilfe spezieller Redoxinitiatoren, bevorzugt Kombinationen aus Hydroperoxid und Ascorbinsäure.

Polymerisate c) im Sinne der Erfindung sind teilvernetzte, kautschukartige Terpolymerisate aus ($C_1$) 5 - 40 Gew.-Teilen Acrylnitril, Styrol, $C_1$-$C_6$-Alkylmethacrylat (insbesondere $C_1$-$C_3$-Alkylmethacrylat) oder deren Mischungen, insbesondere aber aus Acrylnitril und/oder Methylmethacrylat und ($C_2$) 95 - 60 Gew.-Teilen Alkylacrylat, insbesondere $C_3$-$C_8$-Alkylacrylat, sowie 0,05 - 5 Gew.-%, bezogen auf die Summe $C_1$ + $C_2$, einer polyfunktionellen, copolymerisierbaren Polyvinyl- oder Allyl-Verbindung, vorzugsweise Triallylcyanurat, Triallylisocyanurat, Vinylether von Polyolen, Vinyl- oder Allylester polyfunktioneller Carbonsäuren und Bisacrylamide von Diaminen; die Polymerisate c) besitzen Gelgehalte von 20 - 99 Gew.-%, insbesondere größer 40 Gew.-%, mittlere Teilchendurchmesser ($d_{50}$) von 0,15 - 0,4 $\mu$m und einen Quellungsindex größer 10, gemessen in Dimethyl Formamid bei 25 °C.

Die Polymerisate c) können in bekannter Weise durch radikalische, wäßrige Emulsionspolymerisation in Gegenwart anionischer, oberflächenaktiver Stoffe, hergestellt werden.

Harzartige Polymerisate d) im Sinne der Erfindung sind Copolymerisate aus 100 - 60 Gew.-% Styrol, $\alpha$-Methylstyrol oder Alkylmethacrylat (insbesondere $C_1$-$C_3$-Alkylmethacrylat) und 0 - 40 Gew.-% Acrylnitril oder Methacrylnitril; die Polymerisate sind hochmolekular aber löslich, in organischen Lösungsmitteln also unvernetzt. Bevorzugte Polymerisate d) sind Polyalkylmethacrylate sowie deren Copolymere mit Acrylnitril; die Polymerisate d) besitzen Staudinger-Indices [$\eta$], als Maß für das Molekulargewicht, von 2 - 10 dl/g, insbesondere von 2,5 - 6 dl/g (gemessen in Dimethylformamid bei 25 °C). Sie können bevorzugt hergestellt

3

werden durch radikalische Emulsionspolymerisation in Wasser.

Die erfindungsgemäße Polymermischung kann beispielsweise wie folgt hergestellt werden: Fallen die Polymerisate als wäßrige Dispersionen an, so können die Dispersionen im Verhältnis der gewünschten Feststoffe vermischt und dann gemeinsam aufgearbeitet werden, z.B. zu einem Pulver, das gegebenenfalls zu einem Granulat, unter Zusatz konventioneller Hilfsstoffe, verdichtet werden kann. Die einzelnen Polymerisate können auch getrennt aufgearbeitet und dann zur erfindungsgemäßen Mischung vereinigt werden, z.B. in Schnecken, Knetern oder Pulvermischern. Der erste Aufarbeitungsweg ist bevorzugt. Man kann auch zwei oder drei der Polymerisate a) - d) als Dispersionsmischung aufarbeiten und nachträglich, falls erforderlich, die fehlenden Komponenten der erfindungsgemäßen Komposition einfügen. Besonders bevorzugt werden alle Komponenten als Dispersion gemischt und die Mischung aufgearbeitet, insbesondere durch Koagulation mit Elektrolyten oder durch Sprühtrocknung.

Gelgehalte und Quellungsindices wurden in Dimethylformamid bei 25°C ermittelt (vgl. M. Hoffmann et al., Polymeranalytik II, Georg Thieme Verlag, Stuttgart, 1977). Die Teilchendurchmesser stellen mittlere Teilchendurchmesser $d_{50}$ dar (siehe dazu "Ultrazentrifugenmessungen", W. Scholtan et al., Kolloidz. u.Z. Polymere 250 (1972) 783-796). Die Pfropfausbeute wurde bestimmt durch Fraktionierung mit entmischenden Flüssigkeiten (vgl. R. Kuhn, Makromol. Chem. 177, 1525 (1976)). Pfropfausbeute ist das Gewichtsverhältnis der pfropfpolymerisierten, harzbildenden Monomeren zu der Gesamtmenge der eingesetzten harzbildenden Monomeren.

Beispiele

1. Acrylatkautschuk als Pfropfarundlage
1.1 In einem Reaktor werden vorgelegt:
10 300 Gew.-Teile Wasser und 5 Gew.-Teile $C_{14}$-$C_{18}$-Alkylsulfonsäure-Na-Salz. Es wird 30 Minuten mit Stickstoff gespült und unter einem leichten Stickstoffstrom auf 70°C erhitzt. Nach Zugabe einer Lösung von 30 Gew.-Teilen Kaliumperoxodisulfat in 100 Gew.-Teilen Wasser werden folgende Lösungen innerhalb 5 Stunden gleichmäßig zudosiert:
　　　Lösung 1:　　9950 Gew.-Teile n-Butylacrylat
　　　　　　　　　50 Gew.-Teile Trisallylcyanurat
　　　Lösung 2:　　200 Gew.-Teile $C_{14}$-$C_{18}$-Alkylsulfonsäuren-Na-Salz
　　　　　　　　　7000 Gew.-Teile Wasser
Danach läßt man 4 Stunden bei 70°C auspolymerisieren. Es wird eine Polymerisat-Emulsion mit einem Feststoffgehalt von 35 % erhalten. Der mittlere Teilchendurchmesser des Latex ($d_{50}$-Wert) beträgt 160 nm, der Gelgehalt des Polymerisats 91 %.
1.2 In einem Reaktor werden vorgelegt:
17 232 Gew.-Teile Wasser und 588 Gew.-Teile eines Polybutadienkautschuklatex mit einem Polymerfeststoffgehalt von 42 Gew.-% und einem mittleren Teilchendurchmesser ($d_{50}$) von 140 nm. Nach Aufheizen auf 63°C gibt man eine Lösung aus 49,2 Gew.-Teilen Kaliumperoxidisulfat und 1152 Gew.-Teilen Wasser hinzu. Danach werden folgende Mischungen gleichzeitig innerhalb von 5 Stunden bei 63°C in den Reaktor eingespeist:
　　　Lösung 1:　　36 000 Gew.-Teile n-Butylacrylat
　　　　　　　　　81,6 Gew.-Teile Triallylcyanurat
　　　Lösung 2:　　40 800 Gew.-Teile Wasser
　　　　　　　　　384 Gew.-Teile $C_{14}$-$C_{18}$-Alkylsulfonsäuren-Na-Salz
Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser ($d_{50}$) beträgt 480 nm. Das Polymerisat besitzt einen Gel-Gehalt von 93 Gew.-%.
2. Bestandteile der Polymerisatmischungen
Bestandteil a 1:
In einem Reaktor werden 2000 Gew.-Teile Wasser, 833 Gew.-Teile Latex 1.1 und 800 Gew.-Teile Latex 1.2 vorgelegt. Es wird 30 Minuten mit Stickstoff gespült und auf 61°C erhitzt. Unter Rühren werden die folgenden 2 Lösungen zugegeben:
　　　Lösung 1:　　80 Gew.-Teile Wasser
　　　　　　　　　16 Gew.-Teile Cumolhydroperoxid
　　　　　　　　　1,3 Gew.-Teile $C_{14}$-$C_{18}$-Alkylsulfonsäuren-Na-Salz
　　　Lösung 2:　　80 Gew.-Teile Wasser
　　　　　　　　　0,9 Gew.-Teile Ascorbinsäure
Danach werden die Lösungen 3-5 gleichzeitig innerhalb 7 Stunden in den Reaktor bei 61°C eingespeist.

4

| Lösung 3: | 1160 Gew.-Teile Styrol |
| | 600 Gew.-Teile Acrylnitril |
| Lösung 4: | 800 Gew.-Teile Wasser |
| | 18 Gew.-Teile $C_{14}$-$C_{18}$-Alkylsulfonsäuren-Na-Salz |
| Lösung 5: | 1100 Gew.-Teile Wasser |
| | 5,6 Gew.-Teile Ascorbinsäure |

Man läßt 4 Stunden bei 61°C auspolymerisieren. Es wird eine Emulsion mit einem Polymerfeststoffgehalt von 31,3 Gew.-% erhalten. Der Kautschukgehalt des Polymerisats beträgt 25 Gew.-%, die Pfropfausbeute beträgt 60 %.

Bestandteil a 2:

In einem Reaktor werden 1190 Gew.-Teile Wasser, 800 Gew.-Teile Latex 1.1 und 760 Gew.-Teile Latex 1.2 vorgelegt. Es wird 30 Minuten mit Stickstoff gespült und auf 61°C erhitzt. Unter Rühren werden die folgenden 2 Lösungen zugegeben:

| Lösung 1: | 48 Gew.-Teile Wasser |
| | 8 Gew.-Teile Cumolhydroperoxid |
| | 0,8 Gew.-Teile $C_{14}$-$C_{18}$-Alkylsulfonsäuren-Na-Salz |
| Lösung 2: | 48 Gew.-Teile Wasser |
| | 0,5 Gew.-Teile Ascorbinsäure |

Danach werden die Lösungen 3-5 gleichzeitig innerhalb 7 Stunden in den Reaktor bei 61°C eingespeist.

| Lösung 3: | 554 Gew.-Teile Styrol |
| | 286 Gew.-Teile Acrylnitril |
| Lösung 4: | 260 Gew.-Teile Wasser |
| | 10,8 Gew.-Teile $C_{14}$-$C_{18}$-Alkylsulfonsäuren-Na-Salz |
| Lösung 5: | 310 Gew.-Teile Wasser |
| | 3,4 Gew.-Teile Ascorbinsäure |

Man laßt 4 Stunden bei 61°C auspolymerisieren. Es wird eine Emulsion mit einem Polymerfeststoffgehalt von 32,7 Gew.-% erhalten. Der Kautschukgehalt des Polymerisats beträgt 40 Gew.-%, die Pfropfausbeute beträgt 55 %.

Bestandteil b 2:

In einem Reaktor werden 1080 Gew.-Teile Wasser, 2617 Gew.-Teile Latex 1.1 und 2476 Gew.-Teile Latex 1.2 vorgelegt. Es wird 30 Minuten mit Stickstoff gespült und auf 61°C erhitzt. Unter Rühren werden die folgenden 2 Lösungen zugegeben:

| Lösung 1: | 90 Gew.-Teile Wasser |
| | 10 Gew.-Teile Cumolhydroperoxid |
| | 1,5 Gew.-Teile $C_{14}$-$C_{18}$-Alkylsulfonsäuren-Na-Salz |
| Lösung 2: | 90 Gew.-Teile Wasser |
| | 0,6 Gew.-Teile Ascorbinsäure |

Danach werden die Lösungen 3-5 gleichzeitig innerhalb 7 Stunden in den Reaktor bei 61°C eingespeist.

| Lösung 3: | 518 Gew.-Teile Styrol |
| | 267 Gew.-Teile Acrylnitril |
| Lösung 4: | 400 Gew.-Teile Wasser |
| | 10 Gew.-Teile $C_{14}$-$C_{18}$-Alkylsulfonsäuren-Na-Salz |
| Lösung 5: | 400 Gew.-Teile Wasser |
| | 4 Gew.-Teile Ascorbinsäure |

Man läßt 5 Stunden bei 61°C auspolymerisieren. Es wird eine Emulsion mit einem Polymerfeststoffgehalt von 33 Gew.-% erhalten. Der Kautschukgehalt des Polymerisats beträgt 70 Gew.-%, die Pfropfausbeute beträgt 55 %.

Bestandteil b 1:

In einem Reaktor werden 140 Gew.-Teile Wasser, 5765 Gew.-Teile Latex 1.2 vorgelegt. Es wird 30 Minuten mit Stickstoff gespült und auf 70°C erhitzt. Unter Rühren wird die folgende Lösung zugegeben:

| Lösung 1: | 131 Gew.-Teile Wasser |
| | 3,3 Gew.-Teile Kaliumperoxodisulfat |

Danach werden die Lösungen 2 und 3 gleichzeitig innerhalb 4 Stunden in den Reaktor bei 70°C eingespeist.

| Lösung 2: | 552 Gew.-Teile Methylmethacrylat |
| Lösung 3: | 722 Gew.-Teile Wasser |
| | 8,2 Gew.-Teile $C_{14}$-$C_{18}$-Alkylsulfonsäuren-Na-Salz |

Man läßt 4 Stunden bei 70°C auspolymerisieren. Es wird eine Emulsion mit einem Polymerfeststoffgehalt von 37,3 Gew.-% erhalten. Der Kautschukgehalt des Polymerisates beträgt 80 Gew.-%.

Bestandteil c:

In einem Reaktor werden eine Lösung von 2,5 Gew.-Teilen Na-Salz von $C_{14}$-$C_{18}$-Alkylsulfonsäuren und 750 Gew.-Teilen Wasser vorgelegt. Nach Aufheizen auf 70°C gibt man 70 Gew.-Teile der Monomerlösung A) hinzu und initiiert die Polymerisation durch Zugabe einer Lösung von 3,5 Gew.-Teilen Kaliumperoxidisulfat in 50 Gew.-Teilen Wasser, Bei 70°C dosiert man den Rest der Lösung A) sowie die Lösung B) gleichmäßig innerhalb von 6 Stunden in den Reaktor ein und polymerisiert innerhalb von 4 Stunden aus. Es wird ein Latex mit einem Polymerfeststoffgehalt von 38 Gew.-%, mit einem mittleren Teilchendurchmesser ($d_{50}$) von 180 nm und einem Gelgehalt (in Dimethylformamid bei 25°C) von 98 Gew.-% erhalten,

Lösung A: 1105 Gew.-Teile n-Butylacrylat

7 Gew.-Teile Triallylcyanurat

474 Gew.-Teile Acrylnitril

Lösung B: 30 Gew.-Teile Na-Salz von $C_{14}$-$C_{18}$-Alkylsulfonsäuren

1790 Gew.-Teile Wasser

Bestandteil d:

Emulsionspolymerisat aus 66 Gew.-% Methylmethacrylat und 34 Gew.-% Acrylnitril mit einem Staudinger-Index [$\eta$] von 5.4 dl/g (in Dimethylformamid bei 25°C).

3. Herstellung und Eigenschaften der Polymerisatmischungen

Die Polymerisatmischungen, deren Zusammensetzung in Tabelle 1 und deren Eigenschaften in Tabelle 2 beschrieben sind, wurden durch Vermischen der Emulsionen ihrer Bestandteile in entsprechenden Mengen, Zugabe von 1 Gew.-% (bezogen auf Feststoff) eines phenolischen Stabilisators und Koagulation mit wäßriger Magnesiumsulfatlösung hergestellt. Die primär erhaltenen Pulver werden abfiltriert, gewaschen und bei 60°C getrocknet. Die trockenen Pulver werden nach Zugabe von 0,5 Gew.-% Esterwachs auf einem Mischwalzwerk 10 Minuten bei 200°C homogenisiert und bei 190°C zu Prüfkörpern verpreßt. Die Eigenschaften der Prüfkörper sind in Tabelle 2 aufgelistet.

Prüfmethoden:

| | |
|---|---|
| Zugfestigkeit | DIN 53 455 |
| Dehnung | DIN 53 455 |
| Weiterreißfestigkeit | DIN 53 515 |
| Shore-Härte | DIN 53 505/Typ D |
| Vicat-Temperatur | Verfahren A |
| Kältefestigkeit | DIN 53 372 |

Tabelle 1

| Zusammensetzung der Polymermischungen (in Gew.-Teilen) | | | | | | |
|---|---|---|---|---|---|---|
| Versuch Nr. | Bestandteile | | | | | |
| | a 1) | a 2) | b 2) | b 1) | c | d |
| 3.1 | 45 | - | 35 | - | 20 | - |
| 3.2 | - | 55 | - | 25 | 20 | - |
| 3.3 | - | 50 | - | 35 | 15 | 5,5 |
| 3.4 | - | 50 | 20 | - | 30 | 5 |
| 3.5 | - | 35 | 45 | - | 20 | - |
| 3.6* | 40 | - | - | 60 | - | - |
| 3.7* | 60 | - | - | 40 | - | - |
| 3.8* | 60 | - | - | - | 40 | - |
| 3.9* | - | 50 | - | 50 | - | - |
| 3.10* | - | 60 | - | - | 40 | - |

* Diese Mischungen sind nicht erfindungsgemäß. Sie dienen zum Vergleich.

Tabelle 2: Eigenschaften der Mischungen aus Tabelle 1 (* = Vergleichsmischungen)

| Versuch Nr. | Zugfestigkeit [MPa] | Dehnung [%] | Weiterreißfestigkeit [N/mm] | Shore-Härte [15"] | Vicat A [°C] | Kältefestigkeit [°C] | Tiefzieh-verhalten |
|---|---|---|---|---|---|---|---|
| 3.1 | 19,3 | 177 | 66 | 46 | 104 | -30 | + |
| 3.2 | 17,0 | 196 | 58 | 42 | 97 | -32 | + |
| 3.3 | 13,8 | 154 | 49 | 41 | 95 | -35 | + |
| 3.4 | 19,1 | 205 | 67 | 47 | 97 | -34 | + |
| 3.5 | 14,5 | 173 | 44 | 36 | 92 | -45 | + |
| 3.6* | 11,8 | 97 | 57 | 45 | 64 | + 3 | . |
| 3.7* | 15,4 | 154 | 82 | 53 | 76 | +15 | - |
| 3.8* | 24,4 | 196 | 75 | 56 | 103 | - 6 | - |
| 3.9* | 8,2 | 125 | 32 | 26 | 61 | -32 | +1) |
| 3.10* | 20,2 | 205 | 62 | 45 | 95 | -30 | - |

1) tiefgezogene Folie führt sich wachsartig an

Tiefziehversuch:

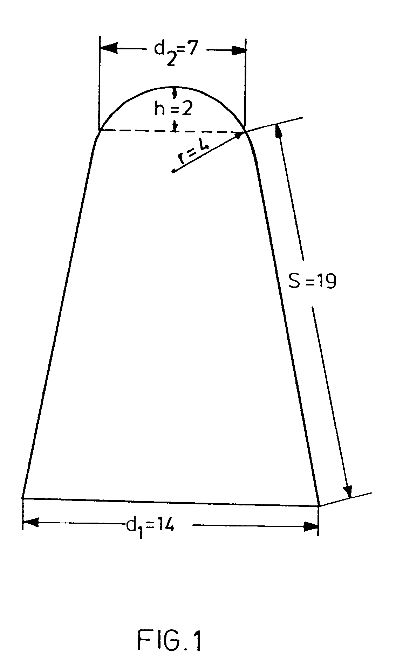

Eine auf der Walze hergestellte Folie (Länge 300 mm, Breite 300 mm, Dicke 1 mm) wird in eine Tiefziehform eingespannt und auf 160 °C bzw. 175 °C Oberflächentemperatur erhitzt (Bestimmung der Oberflächentemperatur mittels Schmelzsalz). Ein Kegelstumpf gemäß Figur 1 wird unter Anlegen eines Vakuums 21 cm tief in die Folie hineingedrückt.

7

Beurteilung:

+ : Es wird bei 160°C und bei 175°C Oberflächentemperatur ein dem Kegelstumpf entsprechender Hohlkörper gleichmäßiger Wandstärke erhalten.

- : Die Folie reißt.

Die Prüfdaten der Tabelle 2 zeigen, daß die erfindungsgemäßen Polymerisatmischungen 3.1-3.5 ein ausgewogenes Eigenschaftsbild, das dem üblicher PVC-haltiger Folien überlegen ist, besitzen, Aus diesen Mischungen lassen sich geprägte Folien mit einem lederartigen Aussehen und Griff durch Tiefziehen herstellen. Demgegenüber fallen die Eigenscchaften der Vergleichsmischungen 3.6*-3.10* stark ab, und brauchbare tiefgezogene Folien lassen sich nicht herstellen.

4. Vergleich der Alterungsstabilität der erfindungsgemäßen Polymerisatmischungen 3.1-3.5 mit bekannten Polyvinylchlorid-haltigen Tiefziehformmassen

Folien aus den Materialien werden bei 130°C und 150°C 21 Tage gelagert. Während sich die Polyvinylchlorid-haltigen Folien dunkelbraun bis schwarz verfärben, verändert sich die Farbe der erfindungsgemäßen Folien praktisch nicht.

**Patentansprüche**

**1.** Weiche, flexible Polymermischungen aus

a) 30 - 70 Gew.-Teilen eines Pfropfpolymerisates eines Gemisches aus 25 - 40 Gew.-Teilen Acrylnitril und 75 - 60 Gew.-Teilen Styrol, $\alpha$-Methylstyrol, Alkylmethacrylat oder Mischungen daraus, auf teilchenförmige Alkylacrylatkautschuke mit mittleren Teilchendurchmessern ($d_{50}$) von 0,1 - 0,8 $\mu$m und Gelgehalten von 50-98 Gew.-%, mit einem Gesamtkautschukgehalt von 20 - 55 Gew.-% und hergestellt mit einer Pfropfausbeute von größer 25 Gew.-%,

b) 60 - 5 Gew.-Teilen eines Pfropfpolymerisates von

(b1) 35 bis 10 Gew.-Teilen Methylmethacrylat, gegebenenfalls in Kombination mit bis zu 30 Gew.-% Styrol, Acrylnitril und/oder Alkylacrylat oder

(b2) 35 bis 10 Gew.-Teilen eines Gemisches aus 20 - 40 Gew.-% Acrylnitril und 80 - 60 Gew.-% Styrol, $\alpha$-Methylstyrol, Alkylmethacrylat oder Mischungen daraus,

auf 65 bis 90 Gew.-Teile einen teilchenförmigen Alkylacrylatkautschuk mit einem mittleren Teilchendurchmesser ($d_{50}$) von 0,1 - 0,8 $\mu$m und Gelgehalten von 50-98 Gew.-%, mit einem Gesamtkautschukgehalt von 65 - 90 Gew.-% und

c) 10 - 40 Gew.-Teilen eines kautschukartigen Terpolymerisates aus $C_1$) 5 - 40 Gew.-% Acrylnitril, Styrol, Alkylmethacrylat oder deren Mischungen und $C_2$) 95 - 60 Gew.-% Alkylacrylat sowie 0,05 bis 5 Gew.-% bezogen auf die Summe von $C_1$ + $C_2$ einer polyfunktionellen copolymerisierbaren Polyvinyl -oder Allylverbindung, mit einem Gelgehalt von 20 bis 99 Gew.-%, einem Quellungsindex größer 10, gemessen in Dimethylformamid bei 25°C, und einem mittleren Teilchen durchmesser ($d_{50}$) von 0,15 - 0,4 $\mu$m, und

d) gegebenenfalls bis zu 6 Gew.-%, bezogen auf die Gesamtmenge a + b + c eines harzartigen unvernetzten Polymerisates aus wenigstens 60 Gew.-% Styrol, $\alpha$-Methylstyrol oder Alkylmethacrylat und bis zu 40 Gew.-% Acrylnitril oder Methacrylnitril mit Staudingerzahlen $[\eta]$ (in Dimethylformamid bei 25°C) von 2 - 10 dl/g.

**Claims**

**1.** Soft, flexible polymer blends of

a) 30 to 70 parts by weight of a graft polymer of a mixture of 25 to 40 parts by weight of acrylonitrile and 75 to 60 parts by weight of styrene, $\alpha$-methyl styrene, alkyl methacrylate or mixtures thereof on particulate alkyl acrylate rubbers with average particle diameters ($d_{50}$) of 0.1 to 0.8 $\mu$m and gel contents of 50 to 98% by weight, the graft polymer having a total rubber content of 20 to 55% by weight and being produced with a grafting yield of greater than 25% by weight,

b) 60 to 5 parts by weight of a graft polymer of

(b1) 35 to 10 parts by weight of methyl methacrylate, optionally in combination with up to 30% by weight of styrene, acrylonitrile and/or alkyl acrylate or

(b2) 35 to 10 parts by weight of a mixture of 20 to 40% by weight of acrylonitrile and 80 to 60% by weight of styrene, $\alpha$-methyl styrene, alkyl methacrylate or mixtures thereof

on 65 to 90 parts by weight of a particulate alkyl acrylate rubber with an average particle diameter ($d_{50}$) of 0.1 to 0.8 $\mu$m and gel contents of 50 to 98% by weight, the total rubber content of the graft polymer being 65 to 90% by weight, and

c) 10 to 40 parts by weight of a rubber-like terpolymer of c1) 5 to 40% by weight of acrylonitrile, styrene, alkyl methacrylate or mixtures thereof and c2) 95 to 60% by weight of alkyl acrylate and 0.05 to 5% by weight, based on the sum of c1) + c2), of a polyfunctional copolymerizable polyvinyl or allyl compound with a gel content of 20 to 99% by weight, a swelling index of greater than 10, as measured in dimethyl formamide at 25°C, and an average particle diameter ($d_{50}$) of 0.15 to 0.4 $\mu$m and

d) optionally up to 6% by weight, based on the total quantity of a + b + c, of a resin-like uncrosslinked polymer of at least 60% by weight of styrene, $\alpha$-methyl styrene or alkyl methacrylate and up to 40% by weight of acrylonitrile or methacrylonitrile with intrinsic viscosities [$\eta$] (in dimethyl formamide at 25°C) of 2 to 10 dl/g.

## Revendications

1. Mélanges souples et flexibles de polymères, constitués

   a) de 30 à 70 parties en poids d'un polymère greffé d'un mélange de 25 à 40 parties en poids d'acrylonitrile et de 75 à 60 parties en poids de styrène, d'$\alpha$-méthylstyrène, de méthacrylate d'alkyle ou de mélanges de ces composés, sur des caoutchoucs d'acrylate d'alkyle en particules ayant des diamètres moyens ($d_{50}$) de 0,1 à 0,8 $\mu$m et des teneurs en gel de 50 à 98 % en poids avec une teneur totale en caoutchouc de 20 à 55 % en poids et produit avec un rendement de greffage de plus de 25 % en poids,

   b) de 60 à 5 parties en poids d'un polymère greffé de

      (b1) 35 à 10 parties en poids de méthacrylate de méthyle, le cas échéant en association avec jusqu'à 30 % en poids de styrène, d'acrylonitrile et/ou d'acrylate d'alkyle ou

      (b2) de 35 à 10 parties en poids d'un mélange de 20 à 40 % en poids d'acrylonitrile et de 80 à 60 % en poids de styrène, d'$\alpha$-méthylstyrène, de méthacrylate d'alkyle ou de mélanges de ces composés,

      sur 65 à 90 parties en poids d'un caoutchouc d'acrylate d'alkyle en particules ayant un diamètre moyen ($d_{50}$) de 0,1 à 0,8 $\mu$m et des teneurs en gel de 50 à 98 % en poids, avec une teneur totale en caoutchouc de 65 à 90 % en poids, et

   c) de 10 à 40 parties en poids d'un terpolymère semblable à un caoutchouc, ($C_1$) de 5 à 40 % en poids d'acrylonitrile, de styrène, de méthacrylate d'alkyle ou de mélanges de ces monomères et $C_2$) de 95 à 60 % en poids d'acrylate d'alkyle ainsi que de 0,05 à 5 % en poids, par rapport à la somme de $C_1$ + $C_2$, d'un composé polyvinylique ou allylique copolymérisable polyfonctionnel, avec une teneur en gel de 20 à 99 % en poids, un indice de gonflement supérieur à 10, mesuré dans le diméthylformamide à 25°C, et un diamètre moyen ($d_{50}$) des particules de 0,15 à 0,4 $\mu$m, et

   d) le cas échéant, de jusqu'à 6 % en poids, par rapport à la quantité totale a + b + c, d'un polymère non réticulé semblable à une résine, constitué d'au moins 60 % en poids de styrène, d'$\alpha$-méthylstyrène ou de méthacrylate d'alkyle et de jusqu'à 40 % en poids d'acrylonitrile ou de méthacrylonitrile avec des indices de Staudinger [$\eta$] (dans le diméthylformamide à 25°C) de 2 à 10 dl/g.

FIG.1